(19) Europäisches Patentamt
European Patent Office
Office européen des brevets

(11) **EP 4 360 789 A1**

(12) **EUROPÄISCHE PATENTANMELDUNG**

(43) Veröffentlichungstag:
**01.05.2024   Patentblatt 2024/18**

(21) Anmeldenummer: **22203383.9**

(22) Anmeldetag: **24.10.2022**

(51) Internationale Patentklassifikation (IPC):
**B23F 5/20** (2006.01)      **B23F 21/20** (2006.01)
**B23F 23/00** (2006.01)      **B23C 5/10** (2006.01)

(52) Gemeinsame Patentklassifikation (CPC):
**B23F 5/20; B23F 21/20;** B23C 5/1081;
B23C 2210/084; B23F 23/006

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **KAP Precision Components GmbH 36043 Fulda (DE)**

(72) Erfinder: **SAUER, Hartmut 36037 Fulda (DE)**

(74) Vertreter: **Aera A/S Niels Hemmingsens Gade 10, 5th Floor 1153 Copenhagen K (DK)**

(54) **VERFAHREN ZUR HERSTELLUNG EINER VERZAHNUNG, WERKZEUGMASCHINE ZUR HERSTELLUNG EINER SOLCHEN, KOMBINATION AUS WERKSTÜCK UND WERKZEUG SOWIE VERWENDUNG EINES WERKZEUGS ZUR HERSTELLUNG EINER VERZAHNUNG**

(57)    Die Erfindung betrifft ein Verfahren zur Herstellung einer Verzahnung, wie Kerbverzahnung oder Kreisbogenverzahnung, an einem Werkstück mittels eines Werkzeugs, das wenigstens einen Zahn mit einer Schneide umfasst, die eine Kontur aufweist, welche wenigstens teilweise der Positivform der herzustellenden Verzahnung entspricht, wobei die Werkzeugachse und die Werkstückachse während der Herstellung der Verzahnung parallel zueinander stehen und das Werkzeug sowie das Werkstück in zueinander entgegengesetzten Richtungen drehangetrieben werden, um während der Herstellung der Verzahnung aufeinander abzuwälzen. Ferner betrifft die Erfindung eine Kombination aus Werkstück und Werkzeug, eine Werkzeugmaschine, insbesondere Fräsmaschine, zur Herstellung einer Verzahnung, wie Kerbverzahnung oder Kreisbogenverzahnung an einem Werkstück sowie die Verwendung eines Werkzeugs zur Herstellung einer Verzahnung, wie Kerbverzahnung oder Kreisbogenverzahnung an einem Werkstück.

Fig. 1

EP 4 360 789 A1

**Beschreibung**

Die Erfindung betrifft ein Verfahren zur Herstellung einer Verzahnung, eine Werkzeugmaschine zur Herstellung einer solchen, eine Kombination aus Werkstück und Werkzeug sowie die Verwendung eines Werkzeugs zur Herstellung einer solchen Verzahnung, im Einzelnen gemäß den Merkmalen der unabhängigen Ansprüche.

Zur spanenden Herstellung von Verzahnungen mittels Werkzeugen sind aus dem Stand der Technik bereits mehrere Verfahren bekannt.

So wälzen beim Polygondrehen - auch Wälzschälen oder Wälzfräsen genannt - Werkstück und Werkzeug aneinander ab. Dabei steht während der gesamten Bearbeitung die Drehachse winklig auf der Drehachse des Werkstücks. Das Werkzeug umfasst eine relativ komplexe Negativform der zu fräsenden Verzahnung. Damit weist es im Wesentlichen so viele Zähne auf, wie die fertige Verzahnung. Für unterschiedliche Teilungen und Verzahnungsdurchmesser müssen daher unterschiedliche Werkzeuge bevorratet werden. Mittels dieses Verfahrens können Umfangsverzahnungen besonders gut hergestellt werden.

Beim Mehrkantschlagen oder Schlagzahnfräsen stehen wiederrum die beiden Drehachsen während der Bearbeitung winklig zueinander. Das Werkzeug muss nicht zwingend die gesamte Negativform der herzustellenden Verzahnung aufweisen. Ferner genügen deutlich weniger Zähne am Werkzeug. Dieses Verfahren wird zur Herstellung von Axialverzahnungen verwendet. Bei den beiden vorgenannten Verfahren werden infolge des Abwälzens von Werkstück und Werkzeug mit einer ganzen Umdrehung des Werkstücks entlang der Breite des Werkzeugs alle Zähne über den gesamten Umfang des Werkstücks hergestellt.

Bei einem weiteren Verfahren, dem Wälzstoßen hingegen bewegt sich das Stoßwerkzeug - welches nur ein und denselben Zahn auf einmal herstellt - parallel zur Drehachse des Werkstücks hin und her. Das Werkzeug wälzt daher während dieser Stoßbewegung nicht auf dem Werkstück ab. Erst durch weitertakten des Werkstücks um die Zahnteilung wird der nächste Zahn aus dem Werkstück herausgestoßen.

Ausgehend von den bekannten Verfahren besteht weiterhin Bedarf, das Fertigungsverfahren zu verbessern, insbesondere die Bearbeitungszeit zu reduzieren, die Genauigkeit der herzustellenden Verzahnung zu erhöhen und ein Werkzeug anzugeben, das für mehrere Teilungen oder Verzahnungsdurchmesser einsetzbar ist.

Die Aufgabe der vorliegenden Erfindung ist es ein Verfahren zur Herstellung einer Verzahnung, eine Werkzeugmaschine zur Herstellung einer solchen, eine Kombination aus Werkstück und Werkzeug sowie die Verwendung eines Werkzeugs zur Herstellung einer solchen Verzahnung anzugeben, die gegenüber dem Stand der Technik verbessert sind.

Die Aufgabe wird durch ein Verfahren zur Herstellung einer Verzahnung, eine Werkzeugmaschine zur Herstellung einer solchen, eine Kombination aus Werkstück und Werkzeug sowie die Verwendung eines Werkzeugs zur Herstellung einer solchen Verzahnung nach den unabhängigen Ansprüchen gelöst. Die abhängigen Ansprüche beschreiben dabei besonders zweckmäßige Ausführungsformen der Erfindung.

Bei einem erfindungsgemäßen Verfahren zur Herstellung einer Verzahnung, wie Kerbverzahnung oder Kreisbogenverzahnung, an einem Werkstück mittels eines Werkzeugs, umfasst der wenigstens eine Zahn eine Schneide, die eine Kontur aufweist, welche wenigstens teilweise der Positivform der herzustellenden Verzahnung entspricht, wobei die Werkzeugachse und die Werkstückachse während der Herstellung der Verzahnung parallel zueinander stehen und das Werkzeug sowie das Werkstück in zueinander entgegengesetzten Richtungen drehangetrieben werden, um während der Herstellung der Verzahnung aufeinander abzuwälzen.

In anderen Worten entspricht die Kontur der Schneide der Negativform der herzustellenden Verzahnung. Negativform (Kontur der Schneide) und Positivform (hergestellte Verzahnung) sind komplementär zueinander. Der Begriff "während der Herstellung" bezieht sich auf die Zeit, in dem Werkzeug und Werkstück in Eingriff miteinander stehen, also aufeinander abwälzen.

Mit Werkzeugachse oder Werkstückachse ist die jeweilige Rotations- oder Drehachse des jeweiligen Werkzeugs oder Werkstücks gemeint. Die jeweiligen Rotations- oder Drehachsen können zugleich entsprechend Symmetrieachsen sein.

Mittels der vorliegenden Erfindung lassen sich somit um eine Rotationsachse periodisch wiederkehrende Strukturen (hier: Verzahnung) herstellen. Dies erfolgt durch die achsparallele Zerspanung mit gegenläufig rotierendem Werkstück und Werkzeug. Die resultierende Werkzeugbewegung entspricht der mathematischen Form einer Zykloide, sobald man den Kreis, der den Werkstückumfang begrenzt, als Linie abwickelt. Die Zykloide kann eine verlängerte bzw. verschlungene Zykloide (welche "Schlaufen" und Schnittpunkte mit sich selbst ausbildet) sein, da die Schneide(n) auf einem größeren Außendurchmesser liegen, als der Schaft des Werkzeugs. Da jedoch bei der Zykloide beide Kreise aufeinander (auf dessen Außenumfang) abwälzen, also der Außendurchmesser der Schneide(n) - auch Werkzeugradius genannt - und der Außendurchmesser des Werkstücks, ist die Zykloide streng genommen eine Epizykloide, entsprechend eine verlängerte bzw. verschlungene Epizykloide, die "Schlaufen" und Schnittpunkte mit sich selbst ausbildet. Diese ergeben sich, sobald der Außendurchmesser des Werkzeugs, also samt Schneide(n) größer ist, als der Außendurchmesser des Werkstücks. Dabei sind die Parameter der Zykloide oder Epizykloide so gewählt, dass die Anzahl der Schlaufen oder der Schnittpunkte der Anzahl der Zahnlücken entspricht. Da sich die Schneide(n) des Werkzeugs periodisch entlang der Epizykloide bewegt, also die Zahnlücke von einem Zahnkopf zweier direkt benachbarter Zähne abträgt, erhält die Zahnlücke in Annäherung den Teil der Form der verschlungenen Epizykloide, der die "Schlaufe" bildet. Da dieser Teil rund ist, kann auf diese Weise eine Kreisbogenverzahnung hergestellt werden.

Die Zykloide wird in ihrer Form so ausgelegt, dass sie im Bereich des Schneideneingriffs der gewünschten Zahnform, genauer gesagt der Zahnlückenform so nahe wie möglich kommt. Die Stellgrößen sind dabei der Achsabstand sowie der Werkzeugradius. Zusätzlich können Profildurchmesser und Profil-Mittenabstand durch folgende Maßnahmen beeinflusst werden: Die Wahl der Technologiewerte (Vorschub, Spanungsdicke) und daraus resultierende der Bearbeitungskräfte, die Wahl des Werkzeugradius sowie die Veränderung des Achskreuzwinkels bis zu $\pm 10°$. Die Werkzeugwinkel $\alpha$ und $\gamma$ sind dabei vorteilhaft so zu wählen, dass sowohl beim Schneideneintritt als auch beim Schneidenaustritt vorteilhafte Zerspanungsbedingungen vorherrschen.

Insbesondere kann die Zahnform einen Kreisbogen mit beliebig vielen Zähnen, einem beliebigen Teilkreis und Kreisbogendurchmesser umfassen, der von dem Werkzeug und auch von dem Drehzahlverhältnis i vorgegeben wird.

Dabei kann für das Drehzahlverhältnis i zwischen Werkstück $n_2$ und Werkzeug $n_0$ gelten:

$$i = \frac{n_0}{n_2} = -\frac{z_2}{z_0}$$

wobei $n_2$ der Drehzahl des Werkstücks, $n_0$ der Drehzahl des Werkzeugs, $z_2$ der Zähnezahl der herzustellenden Verzahnung des Werkstücks und zo der Zähnezahl des Werkzeugs entspricht und die Anzahl der Zähne zo des Werkzeugs so gewählt ist, dass der größte gemeinsame Teiler aus $z_2$ und $z_0$ nicht größer als 1 ist. Damit ist das Drehzahlverhältnis i zwischen Werkzeug und Werkstück gekoppelt an das negative theoretische Zähnezahlverhältnis zwischen den beiden Wälzpartnern Werkzeug und Werkstück. Am Werkzeug müssen daher nicht alle Zähne vorhanden sein, die an der herzustellenden Verzahnung vorhanden sind, es kann nur eine Teilmenge davon am Werkstück angebracht sein.

Bevorzugt wird während der Herstellung der Verzahnung das Werkzeug relativ zum Werkstück - oder umgekehrt - entlang einer Achse, die parallel zur Längsachse des Werkstücks verläuft, verschoben, um die gewünschte Länge der Verzahnung herzustellen, sodass das Werkzeug mit der Außenkontur der Schneide linear entlang der herzustellenden Zahnflanke und parallel zum Zahnlückengrund verschoben wird. Man könnte auch sagen, dass der Abstand zwischen Werkzeug und Werkstück beim Herstellen der Verzahnung, also beim Einfahren der Schneide in das Werkstück und Ausfahren der Schneide aus dem Werkstück konstant bleibt.

Das Werkzeug kann während der Herstellung der Verzahnung relativ zum Werkstück - oder umgekehrt - gleichzeitig entlang einer weiteren, zweiten Achsen verschoben werden, die senkrecht auf der Längsachse des Werkstücks steht, um eine konisch verlaufende Verzahnung herzustellen.

Dabei kann die so hergestellte Verzahnung eine Kerbverzahnung oder Kreisbogenverzahnung sein.

Bevorzugt wird das Verfahren zur Herstellung einer Außen- oder Umfangsverzahnung verwendet.

Die vorliegende Erfindung betrifft auch ein erfindungsgemäßes Werkzeug zur Herstellung einer Verzahnung, wie Kerbverzahnung oder Kreisbogenverzahnung an einem Werkstück, wobei das Werkzeug wenigstens einen Zahn aufweist, mit einer Schneide, die eine Kontur umfasst, welche wenigstens teilweise der Positivform der herzustellenden Verzahnung entspricht, das Werkzeug als Umfangsfräser ausgebildet ist, sodass der wenigstens eine Zahn in Radialrichtung des Werkzeugs von diesem weggerichtet ist, der Außendurchmesser der wenigstens einen Schneide größer als der Abstand zweier benachbarter Zahnflanken der herzustellenden Verzahnung ist und die Schneide eine Länge, eine Breite und eine Höhe aufweist und die Breite so bemessen ist, dass sie einem Bruchteil der Flankenlänge der im Werkstück herzustellenden Verzahnung ausweist.

Dabei kann sich die Zähnezahl zo des Werkzeugs nach der folgenden Formel des Drehzahlverhältnis i bemessen:

$$i = \frac{n_0}{n_2} = -\frac{z_2}{z_0}$$

wobei $n_2$ der Drehzahl des Werkstücks, $n_0$ der Drehzahl des Werkzeugs, $z_2$ der Zähnezahl der herzustellenden Verzahnung des Werkstücks und zo der Zähnezahl des Werkzeugs entspricht und die Anzahl der Zähne zo des Werkzeugs so gewählt ist, dass der größte gemeinsame Teiler aus $z_2$ und $z_0$ nicht größer als 1 ist.

Bevorzugt besitzt das Werkzeug ebenso viele Schneiden, wie die Zähnezahl (und die Zahl der Zahnlücken) der herzustellenden Verzahnung.

Auch betrifft die Erfindung eine Kombination aus einem Werkstück und einem erfindungsgemäßen Werkzeug.

Ebenfalls betrifft die vorliegende Erfindung eine Werkzeugmaschine, insbesondere Fräsmaschine, zur Herstellung einer Verzahnung, wie Kerbverzahnung oder Kreisbogenverzahnung an einem Werkstück, umfassend

ein Maschinengestell;

einen auf dem Maschinengestell montierten Werkzeugträger, in dem ein Werkzeug aufgenommen ist;

eine erste Antriebseinrichtung zum Drehantreiben des Werkzeugs im Werkzeugträger um eine Werkzeugachse;

eine auf dem Maschinengestell montierte Aufnahmevorrichtung zum Aufnehmen eines Werkstücks;

eine zweite Antriebseinrichtung zum Drehantreiben der Aufnahmevorrichtung um eine Werkstückachse;

eine translatorische Antriebsvorrichtung zum Erzeugen einer relativen Translationsbewegung zwischen dem Werkzeugträger und der Aufnahmevorrichtung entlang zumindest zweier Achsen;

eine Steuereinrichtung, die derart eingerichtet ist, dass sie eine Steuerung der relativen geradlinigen Bewegungen zwischen dem Werkzeugträger und der Aufnahmevorrichtung im Wesentlichen gleichzeitig erlaubt; wobei

das Werkzeug als Umfangsfräser ausgebildet ist, sodass der wenigstens eine Zahn in Radialrichtung des Werkzeugs von diesem weggerichtet ist; wobei

das Werkzeug wenigstens einen Zahn aufweist, mit einer Schneide, die eine Kontur umfasst, welche wenigstens teilweise der Positivform der herzustellenden Verzahnung entspricht; wobei

der Außendurchmesser der wenigstens einen Schneide größer als der Abstand zweier benachbarter Zahnflanken der herzustellenden Verzahnung ist; wobei

die Steuereinrichtung eingerichtet ist, um das Werkzeug derart durch den Bereich der herzustellenden Verzahnung am Werkstück zu bewegen, dass es insgesamt entlang der zu bearbeitenden Zahnflanken bei gleichbleibendem Abstand zum Zahnlückengrund und/oder zum Zahnkopf der herzustellenden Verzahnung verschoben wird; wobei

die Werkzeugachse und die Werkstückachse während der Herstellung der Verzahnung parallel zueinander stehen und das Werkzeug sowie das Werkstück in zueinander entgegengesetzten Richtungen drehangetrieben werden, um während der Herstellung der Verzahnung aufeinander abzuwälzen.

Bei der Werkzeugmaschine kann die Steuereinrichtung derart eingerichtet sein, dass das Werkzeug während der Herstellung der Verzahnung das Werkzeug relativ zum Werkstück - oder umgekehrt - entlang einer Achse, die parallel zur Längsachse des Werkstücks verläuft, verschoben wird, um die gewünschte Länge der Verzahnung herzustellen, sodass das Werkzeug mit dessen Außendurchmesser der Schneiden linear entlang der herzustellenden Zahnflanke parallel zum Zahnlückengrund verschoben wird, wobei bevorzugt das Werkzeug während der Herstellung der Verzahnung relativ zum Werkstück - oder umgekehrt - gleichzeitig entlang einer weiteren, zweiten Achse verschoben wird, die senkrecht auf der Längsachse des Werkstücks steht, um eine konisch verlaufende Verzahnung herzustellen.

Schließlich betrifft die Erfindung die Verwendung eines Werkzeugs zur Herstellung einer Verzahnung, wie Kerbverzahnung oder Kreisbogenverzahnung an einem Werkstück, wobei das Werkzeug bevorzugt erfindungsgemäß ausgeführt ist und wenigstens einen Zahn aufweist, mit einer Schneide, die eine Kontur umfasst, welche wenigstens teilweise der Positivform der herzustellenden Verzahnung entspricht, das Werkzeug als Umfangsfräser ausgebildet ist, sodass der wenigstens eine Zahn in Radialrichtung des Werkzeugs von diesem weggerichtet ist, der Außendurchmesser der wenigstens einen Schneide größer als der Abstand zweier benachbarter Zahnflanken der herzustellenden Verzahnung ist und die Schneide eine Länge, eine Breite und eine Höhe aufweist und die Breite so bemessen ist, dass sie einem Bruchteil der Flankenlänge der im Werkstück herzustellenden Verzahnung ausweist.

Der Werkzeugdurchmesser (Außendurchmesser der Schneide(n)) kann bevorzugt so gewählt sein, dass dieser größer ist, als der Außendurchmesser des Werkstücks.

Grundsätzlich gilt das zu dem Verfahren Gesagte auch analog auf das Werkzeug, die Kombination von Werkzeug und Werkstück, die Werkzeugmaschine sowie die Verwendung des Werkzeugs.

Die Vorteile der Erfindung sollen nun anhand eines bevorzugten Ausführungsbeispiels und der Figuren näher dargestellt werden.

Es zeigt:

Fig. 1    eine räumliche Darstellung einer Kombination von Werkstück und Werkzeug gemäß einer möglichen Ausführungsform;

Fig. 2    die resultierende Schneidenbewegung im Werkstück Koordinatensystem;

Fig. 3    eine schematische Darstellung einer Werkzeugmaschine gemäß einer möglichen Ausführungsform;

Fig. 4    eine schematische Ausführungsform eines erfindungsgemäßen Werkzeugs;

Fig. 5    die Darstellung der Schneidenbewegung einer Schneide des Werkzeugs am Werkstück.

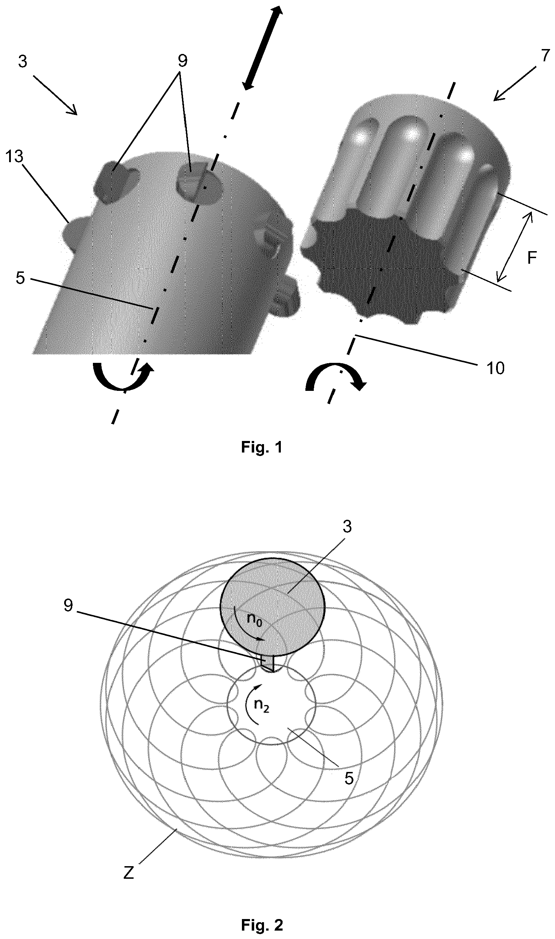

In Fig. 1 ist eine räumliche Darstellung einer Kombination eines Werkstücks 7 und eines erfindungsgemäßen Werkzeugs 3 gemäß einer möglichen Ausführungsform gezeigt. Genauer gesagt zeigt die Darstellung den Zeitpunkt, an dem das Werkzeug 3 eine Verzahnung am Werkstück 7 komplett hergestellt hat und sich nunmehr außer Eingriff mit dem Werkstück 7 befindet.

Das Werkzeug 3 ist vorliegend als Umfangsfräser ausgeführt, d.h. es umfasst mehrere radial zu dessen Schaft angeordnete Zähne 9 und ist dafür vorgesehen, eine Außenverzahnung am Umfang des Werkstücks 7 zu fertigen. Jeder Zahn 9 des Werkzeugs weist dabei eine Schneide 13 auf, die dazu vorgesehen ist, z.B. eine Verzahnung am Werkstück 7 herzustellen.

Die Anzahl der Zähne 9 des Werkzeugs 3 kann nach dem eingangs genannten Drehzahlverhältnis i bestimmt werden. So kann die Anzahl der Zähne $z_0$ des Werkzeugs 3 so gewählt werden, dass der größte gemeinsame Teiler aus $z_2$ und $z_0$ nicht größer als 1 ist. Grundsätzlich wäre es denkbar, dass das Werkzeug 3 lediglich einen einzigen Zahn 9 umfasst. In der in Fig. 1 gezeigten Ausführungsform entspricht die Zähnezahl der Anzahl der Zahnlücken der Verzahnung am Werkstück 7.

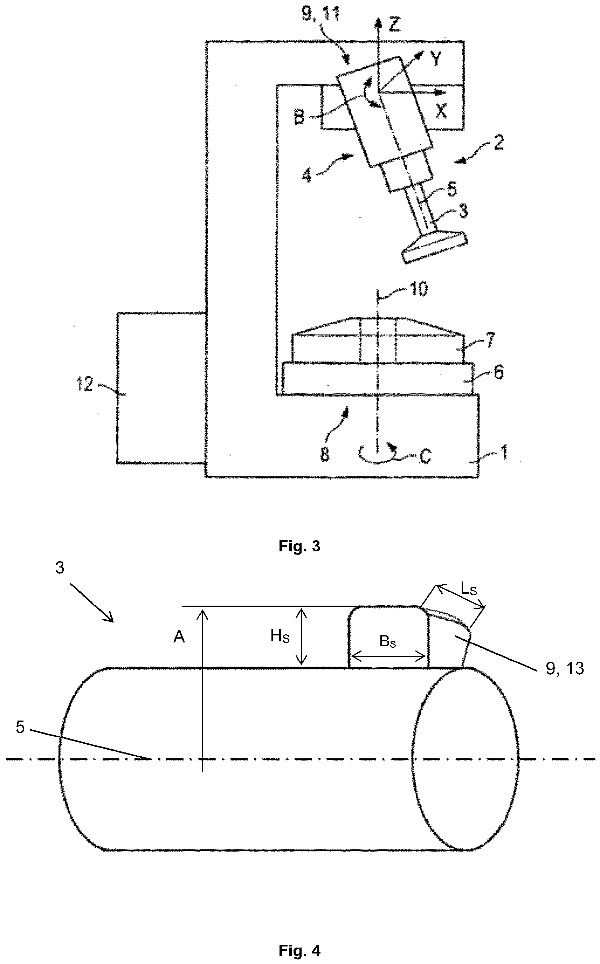

Die Fig. 3 zeigt eine schematische Darstellung der Grundkomponenten einer erfindungsgemäßen Werkzeugmaschine. Diese umfasst ein Maschinengestell 1 und eine darauf montierte Aufnahmevorrichtung 6 zum Tragen des zu bearbeitenden Werkstücks 7. Der Aufnahmevorrichtung 6 und/oder dem Werkstück 7 ist eine rotatorische Antriebsvorrichtung 8 zugeordnet, um das Werkstück 7 und/oder die Aufnahmevorrichtung 6 um die Werkstückachse 10 (vorliegend die C-Achse) zu drehen. Weiterhin trägt das Maschinengestell 1 eine Antriebseinrichtung 4 zum rotatorischen Antreiben eines das Werkzeug 3 enthaltenden Werkzeugträgers 2 um die Werkzeugachse 5. Die Antriebseinrichtung 4 sowie der Werkzeugträger 2 sind vorliegend zu einem Werkzeugkopf zusammengefasst. Der Werkzeugkopf ist vorliegend entlang dreier zueinander senkrecht stehender Achsen X, Y, Z relativ zum Werkstück bewegbar. Hierzu ist wenigstens eine translatorische Antriebsvorrichtung 11 vorgesehen. Der Werkzeugkopf kann zum Erzeugen einer relativen Winkelbewegung zwischen der Werkzeugachse 5 und der Werkstückachse 10 um die B-Achse verdrehbar sein. Dies ist jedoch für die Erfindung nicht nötig, es genügt, wenn die B-Achse so eingestellt wird, dass sie parallel zur Werkstückachse 10 verläuft. Die Werkzeugmaschine umfasst hier somit 5 Achsen, welche über eine Steuereinrichtung 12 im Wesentlichen gleichzeitig steuerbar sind. Für die Erfindung könnte auch auf die B-Achse verzichtet werden. Die Steuereinrichtung 12 ist dabei derart eingerichtet, dass sie das Werkzeug 3 durch den Bereich der herzustellenden Verzahnung am Werkstück 7 bewegen kann, sodass es insgesamt entlang der zu bearbeitenden Zahnflanken bei gleichbleibendem Abstand zum Zahnlückengrund und/oder zum Zahnkopf der herzustellenden Verzahnung verschoben wird. Dies bedeutet, dass die Werkzeugachse 5 und die Werkstückachse 10 während der Bearbeitung parallel zueinander verbleiben.

Zum Herstellen der Verzahnung wird das Werkzeug 3 mit dessen Werkzeugachse 5 parallel zur Werkstückachse 10 gestellt und das Werkstück 7 in die Aufnahmevorrichtung 6 eingespannt. Das Werkzeug 3, die Aufnahmevorrichtung 6 und damit das Werkstück 7 werden in gegensätzlichen Drehrichtungen durch die Werkzeugmaschine, genauer gesagt mittels der rotatorischen Antriebsvorrichtungen 4 und drehangetrieben. So dreht z.B. das Werkzeug 3 um seine Werkzeugachse 5, wie in Fg.1 durch den Pfeil angedeutet, gegen den Uhrzeigersinn, wohingegen das Werkstück 7 um dessen Werkstückachse 10 im Uhrzeigersinn dreht. Das Werkzeug 3 wird hinsichtlich der Frästiefe der Verzahnung entsprechend in Radialrichtung des Werkstücks 7 zugestellt (in Fig. 3 z.B. entlang der X- und/oder Y-Achse) und bewegt sich dann, wie durch den Doppelpfeil angedeutet, parallel zur Werkstückachse 10 (im Fig. 3. entlang der Z-Achse), also parallel zum Zahnlückengrund der herzustellenden Verzahnung. Zu Beginn der Zerspanung stößt das Werkzeug 3 z.B. beim axialen Verfahren parallel zur Werkstückachse 10 mit der Schneide 13 auf das Werkstück 7 und fängt an, es zu zerspanen. Während Werkstück 3 und Werkzeug 7 sich drehen, wird das Werkzeug 3 mittels der Z-Achse verfahren, um bei fertig hergestellter Verzahnung aus dem Werkstück 7 wieder auszutreten. Wiederum kann das Werkzeug dann entlang der X- und/oder Y-Achse wieder radial von der Werkstückachse 10 wegbewegt werden. Eine Bewegung entlang der X- und/oder Y-Achse bei gleichzeitiger axialer Bewegung der Z-Achse kann auch dazu verwendet werden, um eine konische Verzahnung herzustellen.

Durch die Überlagerung beider Drehungen von Werkstück 7 und Werkzeug 3 führt jede Schneide 13 des Werkzeugs 3 einen Teil einer Zykloide, genauer gesagt eine Epizykloide Z aus, welche der Positivform der Zahnlücke der Verzahnung entspricht. Dies ist genauer in Fig. 2 gezeigt. Somit wäre prinzipiell zur Herstellung der in Fig. 2 gezeigten Verzahnung ein Werkzeug 3 mit nur einem Zahn 9 nötig.

Unabhängig von der Zähnezahl kann die Kontur der Schneide 13 so gewählt sein, dass sie wenigstens teilweise der Positivform der herzustellenden Verzahnung, genauer gesagt der herzustellenden Zahnlücke entspricht. Wie in Fig. 1 angedeutet, könnte die Kontur des Zahns 9 bzw. der Schneide 13 z.B. in etwa halbkreisförmig sein.

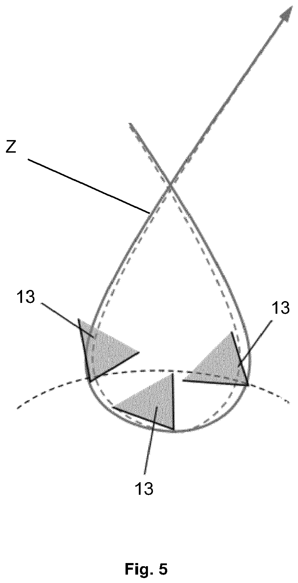

Fig. 5 zeigt die Darstellung der Schneidenbewegung einer Schneide 13 des Werkzeugs 3 am Werkstück 7, von dem durch die gestrichelte Bogenlinie der Kopfkreis der herzustellenden Verzahnung angedeutet ist. Man sieht einen Teil der Epizykloide Z, hier einen verschlungenen Teil ("Schlaufe" mit Schnittpunkt) der jeweils der Positivform der Kontur einer Zahnlücke am Werkstück 7 entspricht.

Unabhängig von den gezeigten Ausführungsformen könnte man auch sagen, dass die hergestellte Verzahnung eine Kerbverzahnung oder Kreisbogenverzahnung ist, bei der die Werkzeug- und Bearbeitungsparameter so gewählt sind, dass sich aus der Abwälzbewegung von Werkzeug 3 und Werkstück 7 eine verschlungene Epizykloide Z ergibt, deren "Schlaufen" radial innerhalb des Kopfkreises der herzustellenden Verzahnung liegen, vergleiche auch Fig. 2.

Dabei ist in Fig. 5 dieselbe Schneide 13 zu drei unterschiedlichen Momenten (Eintritt, Mitte, Austritt) beim Durchlaufen der Epizykloide Z dargestellt. Vorliegend ist letztere in ausgezogener Linie dargestellt, welche die ideale oder theoretische Form der Epizykloide Z zeigt. Die in gestrichelter Linie dargestellte Zykloide entspricht dem tatsächlichen Verfahrweg der Schneide. Die Schneide ist hier der Einfachheit halber als Dreieck dargestellt.

Die Schneide 13 taucht also am Eintritt (rechte Position) in das Werkstück 7 ein, läuft weiter entlang der "Schlaufe" der Epizykloide Z über die Mitte (untere Position) bis hin zum Austritt (linke Position) und überträgt ihre Bewegung entlang der Epizykloide Z als Positivform auf das Werkstück 7, wodurch der Zahnlückengrund der Verzahnung hergestellt wird. Man erkennt, dass die Schneide 13 am Eintritt (rechte Position), in etwa in der Mitte (untere Position) und am Austritt (linke Position) unterschiedliche Anstellwinkel aufweist. Diese ergeben sich durch die beiden entgegengesetzten Rotationen von Werkzeug 3 und Werkstück 7.

In Fig. 4 ist eine schematische, räumliche Darstellung einer möglichen Ausführungsform des Werkzeugs 3 gezeigt, wobei lediglich ein Zahn 9 mit einer Schneide 13 dargestellt ist. Hier ist angedeutet, dass der Außendurchmesser A der wenigstens einen Schneide 13 größer als der Abstand zweier benachbarter Zahnflanken der herzustellenden Verzahnung ist, es sich also um einen Umfangs- und nicht um einen Fingerfräser handelt. Die Schneide 13 hat eine Länge Ls, eine Breite Bs (entlang der Werkzeugachse 5) und eine Höhe Hs (senkrecht zur Werkzeugachse 5). Dabei ist die Breite so bemessen, dass sie einem Bruchteil der Flankenlänge F (siehe Fig. 1) der im Werkstück 7 herzustellenden Verzahnung entspricht. Damit kann die Schneide 13 deutlich kürzer ausgeführt werden, was für den Zerspanungsvorgang und die auf diese einwirkenden Kräfte besonders vorteilhaft ist.

**Bezugszeichen**

1    Maschinengestell
2    Werkzeugträger
3    Werkzeug
4    Antriebseinrichtung
5    Werkzeugachse
6    Aufnahmevorrichtung
7    Werkstück
8    rotatorische Antriebsvorrichtung
9    Zahn
10   Werkstückachse
11   translatorische Antriebsvorrichtung
12   Steuereinrichtung
13   Schneide

A    Außendurchmesser
B    B-Achse
$B_s$   Breite Schneide
C    C-Achse
F    Flankenlänge
$H_s$   Höhe Schneide
Ls   Länge Schneide
X    X-Achse
Y    Y-Achse
Z    Z-Achse

$n_0$   Drehzahl des Werkzeugs
$n_2$   $n_2$ der Drehzahl des Werkstücks

**Patentansprüche**

1.  Verfahren zur Herstellung einer Verzahnung, wie Kerbverzahnung oder Kreisbogenverzahnung an einem Werkstück (7) mittels eines Werkzeugs (3), das wenigstens einen Zahn (9) mit einer Schneide (13) umfasst, die eine Kontur aufweist, welche wenigstens teilweise der Positivform der herzustellenden Verzahnung entspricht, wobei die Werkzeugachse (5) und die Werkstückachse (10) während der Herstellung der Verzahnung parallel zueinander stehen und das Werkzeug (3) sowie das Werkstück (7) in zueinander entgegengesetzten Richtungen drehangetrieben werden, um während der Herstellung der Verzahnung aufeinander abzuwälzen.

2.  Verfahren nach Anspruch 1, **dadurch gekennzeichnet, dass** das Drehzahlverhältnis i zwischen Werkstück (7) $n_2$ und Werkzeug (3) $n_0$ gilt:

$$i = \frac{n_0}{n_2} = -\frac{z_2}{z_0}$$

    wobei $n_2$ der Drehzahl des Werkstücks (7), $n_0$ der Drehzahl des Werkzeugs (3), $z_2$ der Zähnezahl der herzustellenden Verzahnung des Werkstücks (7) und zo der Zähnezahl des Werkzeugs (3) entspricht und die Anzahl der Zähne zo des Werkzeugs (3) so gewählt ist, dass der größte gemeinsame Teiler aus $z_2$ und $z_0$ nicht größer als 1 ist.

3.  Verfahren nach Anspruch 1 oder 2, **dadurch gekennzeichnet, dass** das während der Herstellung der Verzahnung das Werkzeug (3) relativ zum Werkstück (7) - oder umgekehrt - entlang einer Achse (Z), die parallel zur Längsachse des Werkstücks (7) verläuft, verschoben wird, um die gewünschte Länge der Verzahnung herzustellen, sodass das Werkzeug (3) mit der Außenkontur der Schneide (13) linear entlang der herzustellenden Zahnflanke und parallel zum Zahnlückengrund verschoben wird.

**4.** Verfahren nach Anspruch 1 oder 2, **dadurch gekennzeichnet, dass** das Werkzeug (3) während der Herstellung der Verzahnung relativ zum Werkstück (7) - oder umgekehrt - gleichzeitig entlang einer weiteren, zweiten Achsen (X, Y) verschoben wird, die senkrecht auf der Längsachse des Werkstücks (7) steht, um eine konisch verlaufende Verzahnung herzustellen.

**5.** Verfahren nach einem der Ansprüche 1 bis 4, **dadurch gekennzeichnet, dass** die hergestellte Verzahnung eine Kerbverzahnung oder Kreisbogenverzahnung ist.

**6.** Verfahren nach einem der Ansprüche 1 bis 5, **dadurch gekennzeichnet, dass** das Verfahren zur Herstellung einer Außen- oder Umfangsverzahnung verwendet wird.

**7.** Werkzeug (3) zur Herstellung einer Verzahnung, wie Kerbverzahnung oder Kreisbogenverzahnung an einem Werkstück (7), wobei das Werkzeug (3) wenigstens einen Zahn (9) aufweist, mit einer Schneide (13), die eine Kontur umfasst, welche wenigstens teilweise der Positivform der herzustellenden Verzahnung entspricht, das Werkzeug (3) als Umfangsfräser ausgebildet ist, sodass der wenigstens eine Zahn (9) in Radialrichtung des Werkzeugs (3) von diesem weggerichtet ist, der Außendurchmesser der wenigstens einen Schneide (13) größer als der Abstand zweier benachbarter Zahnflanken der herzustellenden Verzahnung ist und die Schneide (13) eine Länge (Ls), eine Breite (Bs) und eine Höhe (Hs) aufweist und die Breite (Bs) so bemessen ist, dass sie einem Bruchteil der Flankenlänge (F) der im Werkstück (7) herzustellenden Verzahnung aufweist.

**8.** Werkzeug (3) nach Anspruch 7, **dadurch gekennzeichnet, dass** sich die Zähnezahl zo des Werkzeugs (3) nach der folgenden Formel des Drehzahlverhältnis i bemisst:

$$i = \frac{n_0}{n_2} = -\frac{z_2}{z_0}$$

wobei $n_2$ der Drehzahl des Werkstücks (7), $n_0$ der Drehzahl des Werkzeugs (3), $z_2$ der Zähnezahl der herzustellenden Verzahnung des Werkstücks (7) und zo der Zähnezahl des Werkzeugs (3) entspricht und die Anzahl der Zähne zo des Werkzeugs (3) so gewählt ist, dass der größte gemeinsame Teiler aus $z_2$ und $z_0$ nicht größer als 1 ist.

**9.** Werkzeug (3) nach Anspruch 7 oder 8, **dadurch gekennzeichnet, dass** das Werkzeug (3) ebenso viele Schneiden (13) besitzt, wie die Zähnezahl der herzustellenden Verzahnung.

**10.** Werkzeug (3) nach einem der Ansprüche 1 bis 9, **dadurch gekennzeichnet, dass** der Außendurchmesser der Schneide(n) (13) größer ist, als der Außendurchmesser des Werkstücks (7).

**11.** Kombination aus Werkstück (7) und Werkzeug (3) nach einem der Ansprüche 7 bis 10.

**12.** Werkzeugmaschine, insbesondere Fräsmaschine, zur Herstellung einer Verzahnung, wie Kerbverzahnung oder Kreisbogenverzahnung an einem Werkstück (7), umfassend

ein Maschinengestell (1);
einen auf dem Maschinengestell (1) montierten Werkzeugträger (2), in dem ein Werkzeug (3) aufgenommen ist;
eine erste Antriebseinrichtung (4) zum Drehantreiben des Werkzeugs (3) im Werkzeugträger (2) um eine Werkzeugachse (5);
eine auf dem Maschinengestell (1) montierte Aufnahmevorrichtung (6) zum Aufnehmen eines Werkstücks (7);
eine zweite Antriebseinrichtung (8) zum Drehantreiben der Aufnahmevorrichtung um eine Werkstückachse (C);
eine translatorische Antriebsvorrichtung (11) zum Erzeugen einer relativen Translationsbewegung zwischen dem Werkzeugträger (2) und der Aufnahmevorrichtung (6) entlang zumindest zweier Achsen;
eine Steuereinrichtung (12), die derart eingerichtet ist, dass sie eine Steuerung der relativen geradlinigen Bewegungen zwischen dem Werkzeugträger (2) und der Aufnahmevorrichtung (6) im Wesentlichen gleichzeitig erlaubt; wobei
das Werkzeug (3) als Umfangsfräser ausgebildet ist, sodass der wenigstens eine Zahn (9) in Radialrichtung des Werkzeugs (3) von diesem weggerichtet ist; wobei
das Werkzeug (3) wenigstens einen Zahn (9) aufweist, mit einer Schneide (13), die eine Kontur umfasst, welche wenigstens teilweise der Positivform der herzustellenden Verzahnung entspricht; wobei
der Außendurchmesser (A) der wenigstens einen Schneide (13) größer als der Abstand zweier benachbarter Zahnflanken der herzustellenden Verzahnung ist; wobei
die Steuereinrichtung (12) eingerichtet ist, um das Werkzeug (3) derart durch den Bereich der herzustellenden Verzahnung am Werkstück (7) zu bewegen, dass es insgesamt entlang der zu bearbeitenden Zahnflanken bei gleichbleibendem Abstand zum Zahnlückengrund und/oder zum Zahnkopf der herzustellenden Verzahnung verschoben wird; wobei

die Werkzeugachse (5) und die Werkstückachse (10) während der Herstellung der Verzahnung parallel zueinander stehen und das Werkzeug (3) sowie das Werkstück (7) in zueinander entgegengesetzten Richtungen drehangetrieben werden, um während der Herstellung der Verzahnung aufeinander abzuwälzen.

13. Werkzeugmaschine nach Anspruch 12, **dadurch gekennzeichnet, dass** die Steuereinrichtung (12) derart eingerichtet ist, dass das Werkzeug (3) während der Herstellung der Verzahnung das Werkzeug (3) relativ zum Werkstück (7) - oder umgekehrt - entlang einer Achse (Z), die parallel zur Längsachse des Werkstücks (7) verläuft, verschoben wird, um die gewünschte Länge der Verzahnung herzustellen, sodass das Werkzeug (3) mit dessen Außendurchmesser der Schneide(n) (13) linear entlang der herzustellenden Zahnflanke parallel zum Zahnlückengrund verschoben wird, wobei bevorzugt das Werkzeug (3) während der Herstellung der Verzahnung relativ zum Werkstück (7) - oder umgekehrt - gleichzeitig entlang einer weiteren, zweiten Achsen (X, Y) verschoben wird, die senkrecht auf der Längsachse des Werkstücks (7) steht, um eine konisch verlaufende Verzahnung herzustellen.

14. Verwendung eines Werkzeugs (3) zur Herstellung einer Verzahnung, wie Kerbverzahnung oder Kreisbogenverzahnung an einem Werkstück (7), wobei das Werkzeug (3) bevorzugt nach einem der Ansprüche 1 bis 10 hergestellt ist und wenigstens einen Zahn (9) aufweist, mit einer Schneide (13), die eine Kontur umfasst, welche wenigstens teilweise der Positivform der herzustellenden Verzahnung entspricht, das Werkzeug (3) als Umfangsfräser ausgebildet ist, sodass der wenigstens eine Zahn (9) in Radialrichtung des Werkzeugs (3) von diesem weggerichtet ist, der Außendurchmesser der wenigstens einen Schneide (13) größer als der Abstand zweier benachbarter Zahnflanken der herzustellenden Verzahnung ist und die Schneide (13) eine Länge, eine Breite und eine Höhe aufweist und die Breite so bemessen ist, dass sie einem Bruchteil der Flankenlänge (F) der im Werkstück (7) herzustellenden Verzahnung ausweist.

**Fig. 1**

**Fig. 2**

**Fig. 3**

**Fig. 4**

**Fig. 5**

EUROPÄISCHER RECHERCHENBERICHT

Nummer der Anmeldung

EP 22 20 3383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 132246 A1 (JTEKT CORP [JP]) 15. Juni 2022 (2022-06-15) | 1-3,5-14 | INV. B23F5/20 B23F21/20 |
| A | * Absätze [0007] - [0009], [0016] - [0034]; Abbildungen 1-6 * | 4 | |
| X | EP 1 644 152 B1 (PROFILATOR GMBH & CO KG [DE]) 26. Januar 2011 (2011-01-26) * Absätze [0009], [0019], [0023], [0024]; Abbildungen 6-12 * | 1,2, 7-11,14 | ADD. B23F23/00 B23C5/10 |

RECHERCHIERTE SACHGEBIETE (IPC)

B23F
B23C

Der vorliegende Recherchenbericht wurde für alle Patentansprüche erstellt

| Recherchenort | Abschlußdatum der Recherche | Prüfer |
|---|---|---|
| Den Haag | 4. April 2023 | Beltzung, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 3383

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2023

| Im Recherchenbericht angeführtes Patentdokument | Datum der Veröffentlichung | Mitglied(er) der Patentfamilie | Datum der Veröffentlichung |
|---|---|---|---|
| DE 102021132246 A1 | 15-06-2022 | CN 114619103 A | 14-06-2022 |
| | | DE 102021132246 A1 | 15-06-2022 |
| | | JP 2022092395 A | 22-06-2022 |
| EP 1644152 B1 | 26-01-2011 | AT 496717 T | 15-02-2011 |
| | | DE 10329413 A1 | 24-02-2005 |
| | | EP 1644152 A1 | 12-04-2006 |
| | | WO 2005002770 A1 | 13-01-2005 |

EPO FORM P0461

Für nähere Einzelheiten zu diesem Anhang : siehe Amtsblatt des Europäischen Patentamts, Nr.12/82